Europäisches Patentamt

European Patent Office

Office européen des brevets

(11) Publication number: **0 377 285 A2**

## EUROPEAN PATENT APPLICATION

(21) Application number: **89312408.1**

(22) Date of filing: **29.11.89**

(51) Int. Cl.5: **H02G 7/16**

(30) Priority: **06.01.89 GB 8900255**

(43) Date of publication of application:
**11.07.90 Bulletin 90/28**

(84) Designated Contracting States:
**AT BE CH DE FR LI LU NL**

(71) Applicant: **VACTITE LIMITED**
**Linacre Lane Bootle**
**Merseyside, L20 6AE(GB)**

(72) Inventor: **Murphy, Richard John**
**26 Saker Street**
**Liverpool, L4 0RA(GB)**

(74) Representative: **Sperling, David**
**Central Patent Dept. (Wembley Office) The**
**General Electric Company plc Hirst**
**Research Centre East Lane**
**Wembley Middlesex HA9 7PP(GB)**

(54) **Overhead electric conductor de-icing.**

(57) An overhead electric conductor system comprises, supported by and parallel to the principal conductor (1), at least one parallel conductor (4) having a different conductance per unit length from that of the principal conductor, the elongate gap therebetween being filled by an intermediate layer of a solid material (5) which, below zero Celsius, is electrically partially conductive, the or each parallel conductor being connected to the principal conductor, whereby Joule heating for de-icing occurs in use in the intermediate layer.

*Fig. 1.*

*Fig. 2.*

EP 0 377 285 A2

## Overhead Electric Conductor De-Icing

This invention relates to an overhead electric conductor system which includes means for de-icing the conductor using Joule heating. The term "de-icing" is intended to include the melting of snow, ice or frost, as well as the prevention of any accumulation of such material on the conductor.

It is already known to use an electric cable parallel to the principal cable for the purposes of electric heating, in order to de-ice the principal cable. A potential difference is applied between the ends of the parallel cable, the resulting current flow down the parallel cable giving rise to Joule heating, the heat being transferred by thermal conduction to the principal cable. The disadvantage of this arrangement is that it requires heavy duty transformers and switching apparatus, which is expensive. Accordingly, the purpose of the invention is to provide an alternative overhead electric conductor system in which de-icing is achieved more ecomonically.

The invention provides an overhead electric conductor system comprising, supported by and parallel to the principal conductor, at least one parallel conductor having a different conductance per unit length from that of the principal conductor, the elongate gap therebetween being filled by an intermediate layer of a solid material which, below zero Celsius, is electrically partially conductive, the or each parallel conductor being connected to the principal conductor, whereby Joule heating for de-icing occurs in use in the intermediate layer.

The different conductance of the parallel conductor gives rise to a potential difference between the parallel conductor and the principal conductor. This potential difference is applied across the intermediate layer, which generates heat by the Joule effect.

Preferably, the partially-conductive solid material is an electrical insulator only at temperatures above a predetermined de-icing threshold, below which it is partially conductive. Accordingly, the current for Joule heating is only drawn when it is required for de-icing, and the de-icing current is limited automatically by the rise in temperature caused by the heating of the solid material itself. Conveniently, the solid material is of plastics filled with carbon black particles, whose electrical conductivity varies substantially with temperature over a temperature range close to zero Celsius. Conveniently, the intermediate layer is provided by an elongate body of the solid material shaped to the contour of the principal conductor, in which body the parallel conductor is embedded.

The elongate body is preferably then held firmly next to the principal conductor by means of clamps.

One significant advantage of the invention is that existing electric power lines may be protected against ice simply by clamping the parallel conductor to the principal conductor in situ, and forming an electrical connection at an appropriate point, for example at a sub-station or a pylon.

In order that the invention may be better understood, one example will now be described, by way of example only, with reference to the accompanying drawings, of which;

Figure 1 is a diagrammatic perspective view of an overhead electric conductor system embodying the invention, cut away to reveal its internal structure, and

Figure 2 is a circuit diagram of an overhead electric conductor system of the type illustrated in Figure 1 but including two parallel conductors in addition to the principal conductor.

An electric power cable 1 comprises several wires 3 wound with a helical lay, and an auxiliary, elongate body 2 for de-icing. The auxiliary body 2 is clamped at regular intervals to the top of the principal conductor 1 by means of clamps 6 which may be plastics heat-shrunk clips.

The auxiliary elongate body 2 consists of an extrusion of filled polymer in which is embedded a strand 4 of aluminium alloy which has a slightly higher resistance per unit length than the steel strands 3 comprising the principal conductor 1. The auxiliary elongate body 2 has, at its base, a concave arcuate shape complementary to the cylindrical shape of the principal conductor 1. Otherwise, the shape of the elongate body is substantially cylindrical.

The filled polymer material 5 fills the elongate gap between the principal conductor 1 and the parallel conductor 4. In this example the material is a resin filled with evenly-distributed carbon black particles. The particle size and density is selected to ensure that the material 5 is electrically insulating at temperatures above a predetermined de-icing threshold of about $2^\circ$ C. Below this threshold temperature, the plastics material contracts to such an extent, drawing the carbon black particles closer together, that the carbon provides a conductive path for electricity between the principal conductor 1 and the parallel conductor 4. Thus, below the threshold temperature, the filler material 5 becomes partially conductive. The current flow produces Joule heating in the filler material 5, which de-ices the entire assembly. This heating also causes the temperature of the filler material 5 to approach the de-icing threshold, which in turn causes the plastics material to expand, separating the carbon black particles and causing the elongate body 5 once again to be electrically insulating. The de-icing current flow is thus controlled automatically.

The parallel conductor 4 is connected electrically to the principal conductor 1, for the supply of electric current, using metallic clamps at intervals along the cable, for example at each pylon. The greater resistance of the parallel conductor 4 gives rise to a potential difference between the two conductors, causing current to flow across the elongate gap between them.

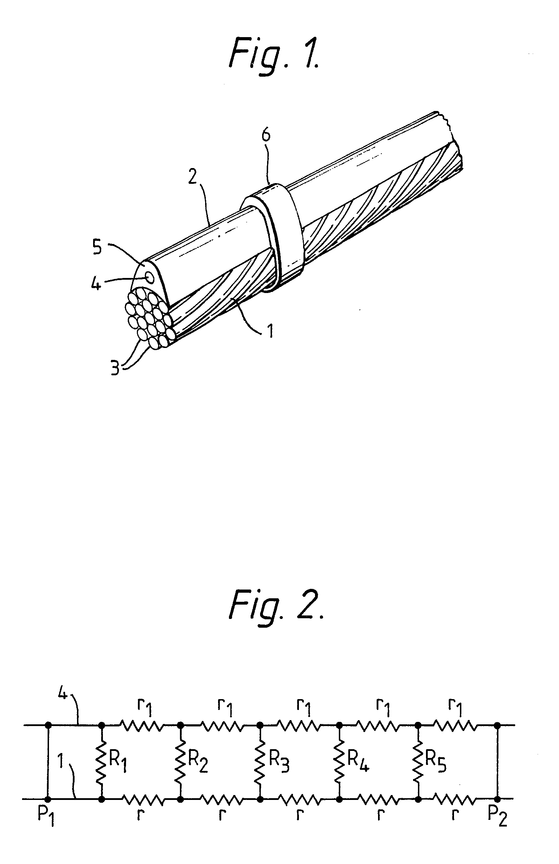

The electrical circuit diagram of the overhead electric conductor system of Figure 1 is shown in Figure 2, for a section of the cable between two adjacent pylons $P_1$ and $P_2$. The natural resistance of the principal conductor 1 is represented as resistances r in series, and the natural resistance of the parallel conductor 4 is represented as series resistances $r_1$. The current path across the material 5 between the conductors is represented by parallel resistances $R_1$-$R_5$. Resistance r is different from $r_1$, giving rise to a potential difference across each of $R_1$-$R_5$, whose values depend on the current flow.

It will be appreciated that other circuit configurations are possible, including those in which a parallel conductor 4 is supplied with electric current from a transformer, in this case the transformer generating the potential difference between that conductor and the principal conductor. It would also be possible to provide more than one parallel conductor adjacent the same principal conductor.

## Claims

1. An overhead electric conductor system comprising, supported by and parallel to the principal conductor, at least one parallel conductor having a different conductance per unit length from that of the principal conductor, the elongate gap therebetween being filled by an intermediate layer of a solid material, which, below zero Celsius, is electrically partially conductive, the or each parallel conductor being connected to the principal conductor, whereby Joule heating for de-icing occurs in use in the intermediate layer.

2. A system according to Claim 1, in which the partially conductive solid material is an electrical insulator only at temperatures above a predetermined de-icing threshold, below which it is partially conductive.

3. A system according to Claim 2, in which the solid is a plastics material filled with conductive particles, the electrical conductivity of the solid material varying substantially with temperature over a temperature range close to zero Celsius.

4. A system according to Claim 3, in which the conductive particles are of carbon black.

5. A system according to any preceding Claim, in which the intermediate layer is provided by an elongate body of the solid material, in which body the parallel conductor is embedded.

6. A system according to Claim 5, in which the elongate body is shaped to the contour of the principal conductor.

7. A system according to Claim 5 or 6, comprising clamps holding the elongate body firmly next to the principal conductor.

# Fig. 1.

# Fig. 2.